Europäisches Patentamt

European Patent Office

Office européen des brevets

(19)

(11) EP 0 819 736 A1

(12) EUROPÄISCHE PATENTANMELDUNG

(43) Veröffentlichungstag:
21.01.1998 Patentblatt 1998/04

(51) Int. Cl.$^6$: C08L 83/04, C08K 5/14

(21) Anmeldenummer: 97111716.3

(22) Anmeldetag: 10.07.1997

(84) Benannte Vertragsstaaten:
AT BE CH DE DK ES FI FR GB GR IE IT LI LU MC
NL PT SE

(30) Priorität: 17.07.1996 DE 19629063

(71) Anmelder: Wacker-Chemie GmbH
81737 München (DE)

(72) Erfinder:
• Fink, Peter, Dr.
84561 Mehring (DE)

• Birneder, Richard
84359 Simbach (DE)
• Schreiter, Hedwig
84529 Tittmoning (DE)

(74) Vertreter:
Deffner-Lehner, Maria, Dr. et al
Wacker-Chemie GmbH,
Zentralabteilung PLM,
Hanns-Seidel-Platz 4
81737 München (DE)

(54) **Flüssigsiliconkautschuk mit niedrigem Druckverformungsrest**

(57) Die Erfindung betrifft zu Elastomeren vernetzende Massen auf der Basis von

Komponente (A), enthaltend Polyorganosiloxan (I) mit mindestens zwei Alkenylgruppen pro Molekül und

Komponente (B), enthaltend Polyorganosiloxan (II) mit mindestens zwei siliciumgebundenen Wasserstoffatomen und organischem Peroxid (III).

**Beschreibung**

Die Erfindung betrifft zu Elastomeren vernetzende Massen, ein Verfahren zu ihrer Herstellung und Formkörper, die aus diesen Massen hergestellt werden.

Zu Elastomeren vernetzende Massen, die einen niedrigen Druckverformungsrest haben sollen, sind bereits beschrieben. EP 432 761 beschreibt peroxidvernetzende Siliconelastomere, denen ein Alkenylsilazan zugesetzt wird. EP-A 0 415 180 beschreibt peroxidischvernetzende Organopolysiloxane mit Cerverbindungen oder Magnesiumoxid. US-4,774,281 beschreibt peroxidischvernetzende Organopolysiloxane, die mittels Heißluftvulkanisation vernetzt werden. In EP-B 0 377 185 wird eine Zusammensetzung beschrieben, die sich aus mehreren Teilen zusammensetzt, wobei ein Teil ein Vinylgruppen aufweisendes Diorganopolysiloxan, ein weiterer Teil ein Organohydrogensiloxan und ein weiterer Teil ein Platinkatalysator ist sowie ein organisches Peroxid, das in einem Teil in Mengen von mindestens 0,2 Gew.-% enthalten ist. Die Verarbeitungszeit der katalysierten Mischung wird nach EP-B 0 377 185 durch cyclische Vinylmethylsiloxane verbessert.

Alle diese Massen haben den Nachteil, daß entweder der Druckverformungsrest zu hoch oder die Reproduzierbarkeit des Druckverformungsrests nach Lagerung zu gering ist.

Aufgabe der Erfindung ist es einen geringen Druckverformungsrest bei gleichzeitiger hoher Reproduzierbarkeit desselben nach Lagerung zur Verfügung zu stellen.

Gegenstand der Erfindung sind zu Elastomeren vernetzende Massen auf der Basis von

Komponente (A), enthaltend Polyorganosiloxan (I) mit mindestens zwei Alkenylgruppen pro Molekül und

Komponente (B), enthaltend Polyorganosiloxan (II) mit mindestens zwei siliciumgebundenen Wasserstoffatomen und organischem Peroxid (III).

Komponente (A) enthält Polyorganosiloxan (I). Polyorganosiloxan (I) der erfindungsgemäßen Siliconkautschukmassen ist ein mindestens zwei Alkenylgruppen pro Molekül enthaltendes Polyorganosiloxan mit einer Viskosität bei 25°C im Bereich von vorzugsweise 0,5 bis 500 Pa · s, bevorzugt von 1 bis 100 Pa · s und besonders bevorzugt 7 bis 25 Pa · s. Polyorganosiloxan (I) wird in Mengen, die vorzugsweise zwischen 10-98 Gew.% und bevorzugt zwischen 20-80 Gew.% und besonders bevorzugt 50-80 Gew.% liegen, eingesetzt.

Komponente (A) enthält vorzugsweise den metallischen Katalysator (IV) und kann auch noch weitere Zusätze, wie unten aufgeführt, enthalten.

Komponente (B) enthält Polyorganosiloxan (II), ein organisches Peroxid und kann auch noch Polyorganosiloxan (I) zusätzlich sowie weitere Zusätze wie unten aufgeführt, enthalten.

Polyorganosiloxan (II) der erfindungsgemäßen Siliconkautschukmassen ist ein mindestens zwei Si-H Gruppen pro Molekül enthaltendes Polyorganosiloxan mit einer Viskosität bei 25°C im Bereich von vorzugsweise 100 bis 1000 mPa · s, besonders bevorzugt von 200 bis 500 mPa · s.

Das Polyorganosiloxan (I) ist aufgebaut aus Einheiten der Formel

$$R_a R^1_b SiO_{(4-a-b)/2,}$$

wobei a 0, 1 oder 2 ist, b 0, 1, 2 oder 3 ist, mit der Maßgabe, daß mindestens zwei Reste R in jedem Molekül vorhanden sind und die Summe (a+b) ≤ 4 beträgt.

R stellt eine Alkenylgruppe dar. Als Alkenylgruppen können sämtliche einer Hydrosilylierungsreaktion mit einem SiH-funktionellen Vernetzungsmittel zugänglichen Alkenylgruppen gewählt werden. Vorzugsweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

$R^1$ stellt einen substituierten oder nichtsubstituierten, aliphatisch gesättigten, monovalenten Kohlenwasserstoffrest mit 1 bis 10 Kohlenstoffatomen, vorzugsweise 1 bis 6 Kohlenstoffatomen, dar. Beispiele hierfür sind die Alkylgruppen, wie vorzugsweise Methyl, Ethyl, Propyl, Butyl und Hexyl, Cycloalkylgruppen, wie Cyclopentyl, Cyclohexyl und Cycloheptyl, Aryl- und Alkarylgruppen, wie Phenyl, Tolyl, Xylyl, Mesityl, Benzyl, beta-Phenylethyl und Naphthyl, oder halogensubstituierte Gruppen, wie 3,3,3-Trifluorpropyl, o-, p- und m-Chlorphenyl, Bromtolyl und beta-Cyanethyl.

Die Alkenylgruppen können in jeder Position der Polymerkette, insbesondere an den endständigen Siliciumatomen, gebunden sein.

Polyorganosiloxan (I) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane kann linear oder auch verzweigt sein. Verzweigte Polyorganosiloxane enthalten neben monofunktionellen Einheiten, wie $RR^1_2SiO_{1/2}$ und $R^1_3SiO_{1/2}$, und difunktionellen Einheiten, wie $R^1_2SiO_{2/2}$ und $RR^1SiO_{2/2}$, auch trifunktionelle Einheiten, wie $R^1SiO_{3/2}$ und $RSiO_{3/2}$, und/oder tetrafunktionelle Einheiten der Formel $SiO_{4/2}$, wobei R und $R^1$ die oben dafür angegebene Bedeutung haben. Der Gehalt an diesen zu verzweigten Polyorganosiloxanen führenden tri- und/oder tetrafunktionellen Einheiten sollte 20 Mol-% nicht wesentlich überschreiten. Das Alkenylgruppen enthaltende Polyorganosiloxan kann auch Einheiten der allgemeinen Formel $-OSi(R^2R^3)R^4Si(R^2R^3)O-$ enthalten, wobei sowohl $R^2$ als auch $R^3$ die vorstehend für R und $R^1$ angegebene Bedeutung haben und $R^4$ einen bivalenten organischen Rest, wie Ethylen, Propylen, Phenylen, Diphenylen oder Polyoxymethylen, bezeichnet. Derartige Einheiten können bis zu einem Anteil von 50 Mol-% im Polyorganosiloxan (I) enthalten sein.

Besonders bevorzugt ist die Verwendung Vinylgruppen enthaltender Polydimethylsiloxane, deren Moleküle der Formel

$$(ViMe_2SiO_{1/2})_2 (ViMeSiO)_a (Me_2SiO)_b$$

entsprechen, wobei a null oder eine nichtnegative Zahl und b eine nichtnegative Zahl ist und folgende Relationen erfüllt werden: $50<(a+b)<2200$, vorzugsweise $200<(a+b)<1000$.

Als Vernetzer wird Polyorganosiloxan (II) bei der Additionsvernetzung der erfindungsgemäßen Siliconkautschukmasse eingesetzt, das vorzugsweise ein SiH-funktionelles Polyorganosiloxan ist, das aufgebaut ist aus Einheiten der nachfolgenden Formel

$$H_c R^1{}_d SiO_{(4-c-d)/2,}$$

wobei c 0, 1 oder 2 ist, d 0, 1, 2 oder 3 ist, mit der Maßgabe, daß die Summe $(c+d) < 4$ ist und daß mindestens zwei siliciumgebundene Wasserstoffatome pro Molekül vorhanden sind und $R^1$ die oben dafür angegebene Bedeutung hat.

Bevorzugt ist die Verwendung eines drei oder mehr SiH-Bindungen pro Molekül enthaltenden Polyorganosiloxans. Bei Verwendung eines nur zwei SiH-Bindungen pro Molekül aufweisenden Polyorganosiloxans (II) enthält das Alkenylgruppen enthaltende Polyorganosiloxan (I) vorzugsweise mindestens drei Alkenylgruppen pro Molekül.

Das Polyorganosiloxan (II) wird als Vernetzer eingesetzt. Der Wasserstoffgehalt des Vernetzers, welcher sich ausschließlich auf die direkt an Siliciumatome gebundenen Wasserstoffatome bezieht, liegt im Bereich von 0,002 bis 1,7 Gew.-% Wasserstoff, vorzugsweise zwischen 0,1 und 1,7 Gew.% Wasserstoff.

Das Polyorganosiloxan (II) enthält vorzugsweise mindestens drei und vorzugsweise höchstens 600 Siliciumatome pro Molekül. Besonders bevorzugt ist die Verwendung von SiH-Vernetzern, die zwischen 4 und 200 Siliciumatome pro Molekül enthalten.

Die Struktur des Polyorganosiloxans (II) kann linear, verzweigt, cyclisch oder netzwerkartig sein. Lineare und cyclische Polyorganosiloxane (II) sind aus Einheiten der Formel $HR^1{}_2SiO_{1/2}$, $R^1{}_3SiO_{1/2}$, $HR^1SiO_{2/2}$ und $R^1{}_2SiO_{2/2}$ zusammengesetzt, wobei $R^1$ die vorstehend dafür angegebene Bedeutung hat. Verzweigte und netzwerkartige Polyorganosiloxane (II) enthalten zusätzlich trifunktionelle Einheiten, wie $HSiO_{3/2}$ und $R^1SiO_{3/2}$, und/oder tetrafunktionelle Einheiten der Formel $SiO_{4/2}$. Mit zunehmendem Gehalt an tri- und/oder tetrafunktionellen Einheiten weisen diese Vernetsungsmittel eine netzwerkartige, harzartige Struktur auf. Die im Polyorganosiloxan (II) enthaltenen organischen Reste $R^1$ werden üblicherweise so gewählt, daß diese mit den im Polyorganosiloxan (I) befindlichen organischen Resten verträglich sind, so daß die Bestandteile (I) und (II) mischbar sind.

Als Vernetzer können auch Kombinationen und Mischungen der hier beschriebenen Polyorganosiloxane (II) verwendet werden.

Besonders bevorzugte Polyorganosiloxane (II) haben die Formel

$$(HR^1{}_2SiO_{1/2})_e (R^1{}_3SiO_{1/2})_f (HR^1SiO_{2/2})_g (R^1{}_2SiO_{2/2})_h,$$

wobei die nichtnegativen ganzen Zahlen e, f, g und h folgende Relationen erfüllen: $(e+f)=2$, $(e+g)>2$, $5<(g+h)<200$ und $R^1$ die oben dafür angegebene Bedeutung hat.

Das Polyorganosiloxan (II) ist vorzugsweise in einer solchen Menge in der härtbaren Siliconkautschukmasse enthalten, daß das Molverhältnis von SiH-Gruppen zu Alkenylgruppen vorzugsweise zwischen 0,5 und 5, bevorzugt zwischen 1,0 und 3,0, liegt.

Polyorganosiloxan II wird in Mengen von 0,1 bis 15 Gew.%, bevorzugt in Mengen von 2 bis 8 Gew.% und besonders bevorzugt 3 bis 6 Gew.% eingesetzt.

Der metallische Katalysator (IV), der vorzugsweise in Komponente (A) enthalten ist, dient für die Additionsreaktion (Hydrosilylierung) zwischen den Alkenylgruppen des Polyorganosiloxans (I) und den siliciumgebundenen Wasserstoffatomen des Polyorganosiloxans (II). In der Literatur wurden zahlreiche geeignete Hydrosilylierungskatalysatoren (IV) beschrieben. Prinzipiell können alle üblicherweise in additionsvernetzenden Siliconkautschukmassen eingesetzten Hydrosilylierungskatalysatoren verwendet werden.

Als Hydrosilylierungskatalysator (IV) können Metalle, wie Platin, Rhodium, Palladium, Ruthenium und Iridium, vorzugsweise Platin, die ggf. auf feinteiligen Trägermaterialien, wie Aktivkohle, Aluminiumoxid oder Siliciumdioxid, fixiert sind, eingesetzt werden.

Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln $(PtCl_2 \cdot Olefin)_2$ und $H(PtCl_3 \cdot Olefin)$ verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel $(PtCl_2 \cdot C_3H_6)_2$, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbikarbonat in ethanolischer Lösung. Besonders bevorzugt sind Komplexe des Platins mit Vinylsiloxanen, wie sym-Divinyltetramethyldisiloxan.

Der Hydrosilylierungskatalysator (IV) kann auch in mikroverkapselter Form eingesetzt werden, wobei der den Katalysator enthaltende und im Polyorganosiloxan unlösliche feinteilige Feststoff beispielsweise ein Thermoplast (Polyesterharze, Siliconharze) ist. Der Hydrosilylierungskatalysator kann auch in Form einer Einschlußverbindung, beispielsweise in einem Cyclodextrin, eingesetzt werden.

Die Menge des eingesetzten Hydrosilylierungskatalysators richtet sich nach der gewünschten Vernetzungsgeschwindigkeit sowie ökonomischen Gesichtspunkten. Bei Verwendung gebräuchlicher Platin-Katalysatoren liegt der Gehalt von Platin-Metall in der härtbaren Siliconkautschukmasse im Bereich von 0,1 bis 500 Gew.-ppm, vorzugsweise zwischen 10 und 100 Gew.-ppm Platin-Metall. Ansonsten wird der Katalysator gegebenenfalls zusammen mit einem Inhibitor vorzugsweise in Mengen von 0,01 bis 5 Gew.% eingesetzt.

Bei dem erfindungsgemäßen organischen Peroxid handelt es sich um ein Peroxid der Formel $R^1$-O-O-$R^3$, wobei $R^1$ die oben angegebene Bedeutung hat und mit Halogen substituiert sein kann und $R^1$ gleich $R^3$ ist, vorzugsweise um ein Peroxid, wie Di-tert.butylperoxid, Bis(tert.butylperoxyisopropyl)benzol, Dicumylperoxid, Bis(tert.butylperoxy)hexan, wobei Dicumylperoxid und 2,5-Dimethyl-2,5-bis(tert.butylperoxy)hexan bevorzugt sind und 2,5-Dimethyl-2,5-bis(tert.butylperoxy)hexan besonders bevorzugt ist. Es können auch Gemische dieser Peroxide eingesetzt werden. Das organische Peroxid oder das Gemisch wird in Mengen von 0,01 - 0,19 Gew.%, besonders bevorzugt von 0.08 - 0,1 Gew.% eingesetzt.

In einer der Komponenten A oder B können auch die folgenden Zusätze enthalten sein.

Während die Bestandteile (I) bis (IV) notwendige Bestandteile der erfindungsgemäßen Siliconkautschukmasse sind, können wahlweise weitere Zusätze zu einem Anteil von bis zu 50 Gew.-%, vorzugsweise zwischen 1 und 20 Gew.-%, in der Siliconkautschukmasse enthalten sein. Diese Zusätze können z.B. Füllstoffe, Haftvermittler, Inhibitoren, Pigmente, Farbstoffe, Weichmacher usw. sein.

Beispiele für Füllstoffe sind verstärkende Füllstoffe, also Füllstoffe mit einer spezifischen Oberfläche nach BET von mindestens 50 $m^2$/g, vorzugsweise 50 - 500 $m^2$/g, bevorzugt 150 - 300 $m^2$ wie pyrogen erzeugte Kieselsäure, unter Erhalt der Struktur entwässerte Kieselsäurehydrogele, also sogenannte "Aerogele", und andere Arten von gefälltem oder pyrogenem Siliciumdioxid; und nicht verstärkende Füllstoffe, also Füllstoffe mit einer spezifischen Oberfläche nach BET von weniger als 50 $m^2$/g, wie Quarzmehl, Diatomeenerde, Calciumsilikat, Zirkoniumsilikat, Zeolithe, Eisenoxid, Zinkoxid, Titandioxid, Aluminiumoxid, Calciumcarbonat, Magnesiumcarbonat, Zinkcarbonat, Ruß, Glimmer, Siloxanharze und Kreide. Die genannten Füllstoffe können hydrophobiert sein.

Beispiele für Weichmacher sind bei Raumtemperatur flüssige, durch Triorganosiloxygruppen endblockierte Diorganopolysiloxane, wie durch Trimethylsiloxygruppen endblockierte Dimethylpolysiloxane mit einer Viskosität von 10 bis 10 000 mPa $\cdot$ s bei 25°C.

Als weitere Zusätze können Zusätze wie Quarzmehl, Diatomeenerde, Tone, Kreide, Lithopone, Ruße, Graphit, Metalloxide, -karbonate, -sulfate, Metallstäube, Fasern, Farbstoffe, Pigmente usw. enthalten sein.

Insbesondere können harzartige Polyorganosiloxane, die im wesentlichen aus Einheiten der Formeln $R^5_3SiO_{1/2}$, $R^5SiO_{3/2}$ und/oder $SiO_{4/2}$, ggf. auch $R^5_2SiO_{2/2}$, bestehen, bis zu einem Anteil von SO Gew.-%, vorzugsweise bis zu 20 Gew.-%, bezogen auf das Gesamtgewicht des Siliconkautschuks, enthalten sein. Das Molverhältnis zwischen monofunktionellen und tri- oder tetrafunktionellen Einheiten dieser harzartigen Polyorganosiloxane liegt vorzugsweise im Bereich von 0,5 : 1 bis 1,5 : 1. Es können auch funktionelle Gruppen, insbesondere Alkenylgruppen, in Form von $R^4R^5_2SiO_{1/2}$- und/oder $R^4R^5SiO_{2/2}$-Einheiten, enthalten sein.

Enthalten sein können insbesondere Zusätze, die der gezielten Einstellung der Verarbeitungszeit und Vernetzungsgeschwindigkeit der härtbaren Siliconkautschukmasse dienen. Diese an sich bekannten Inhibitoren und Stabilisatoren sind beispielsweise: acetylenische Alkohole, wie Ethinylcyclohexanol und 2-Methyl-3-butin-2-ol, Polymethylvinylcyclosiloxane, wie Methylvinylcyclotetrasiloxan, niedermolekulare Siloxanöle mit Vinyldimethylsiloxy-Endgruppen, Trialkylcyanurate, Alkylmaleate, wie Diallylmaleat und Dimethylmaleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, Benzotriazol, organische Sulfoxide, organische Amine und Amide, Phosphane, Phosphite, Nitrile, Diaziridine und Oxime.

Die Herstellung der erfindungsgemäßen Siliconkautschukmassen erfolgt vorzugsweise, indem in einem ersten Schritt der Füllstoff mit dem Alkenylgruppen enthaltenden Polyorganosiloxan (I) zu einem einheitlichen Gemisch vermischt wird. Die Einarbeitung des Füllstoffs in das Polyorganosiloxan erfolgt in einem geeigneten Mischer, z.B. einem Kneter.

Die Komponenten (A) und (B) werden in einem Gewichtsverhältnis von 10:1 bis 1:0,5, bevorzugt 1:1 verwendet.

Ein weiterer Gegenstand der Erfindung ist ein Verfahren bei dem Komponenete (A) mit Komponente (B) vermischt wird.

Die Komponenten (A) und (B) haben die gleiche Bedeutung wie oben definiert. Die Komponenten werden bei Raumtemperatur (25°C) und Normaldruck innig vermischt. Die Mischung wird anschließend für vorzugsweise 0,1 bis 10 min, bevorzugt 5 min bei bevorzugt 170°C vulkanisiert.

Ein weiterer Gegenstand der Erfindung ist ein Formkörper, der erfindungsgemäße Massen oder nach dem erfindungsgemäßen Verfahren hergestellte Massen enthält.

Die erfindungsgemäßen Formteile zeichnen sich dadurch aus, daß sie transparente, gegebenenfalls einfärbbare gummielastische Formteile mit guten bis sehr guten mechanischen Eigenschaften sind, die sich nach dem erfindungsgemäßen Verfahren wirtschaftlich herstellen lassen. Derartige Formteile lassen sich vorzugsweise durch Spritzgießen herstellen. Derartige Formteile weisen bei Deformation eine bleibende Verformung auf, den Druckverformungsrest. Diese Verformung ist insbesondere im produktionsfrischen Zustand, wenn also nicht nachgeheizt wird, besonders hoch. Für bestimmte Anwendungen, z.B. Dichtungen im Automobil- und Maschinenbausektor, wo häufig aus technischen oder Kostengründen kein Nachheizen der Teile, also ein Tempern, erfolgt, ist es essentiell, insbesondere bei ungetemperten Teilen einen möglichst niedrigen Druckverformungsrest zu realisieren. Dieses Ziel wird durch die Erfindung erreicht. Allerdings ist auch ein Tempern erfindungsgemäß möglich.

Überraschend ist insbesondere die gute Reproduzierbarkeit des Druckverformungsrests nach Lagerung, wenn das organische Peroxid in geringer Menge in der Komponente (B) enthalten ist. So ist die Vernetzungsgeschwindigkeit bei den erfindungsgemäßen Formteilen noch nach einer längeren Lagerzeit überraschend geringer als wenn das organische Peroxid in der Komponente (A) enthalten wäre. Dies ermöglicht eine Garantie von bis zu 6 Monaten Lagerstabilität auf das konfektionierte Produkt. Daher sind durch die gute Lagerstabilität kurze, konstante Vernetzungszeiten gegeben, die eine schnelle und kontinuierliche Produktion gewährleisten. Das bedeutet, die Verarbeitungsmaschinen müssen nicht immer wieder auf ansonsten durch die Lagerung bedingte längere Vernetzungszeiten nachjustiert werden, was zu erheblicher Kostenersparnis führt und es können aufgrund der kurzen Vernetzungszeit mehr Formteile produziert werden.

**Beispiel 1:**

a) Eine Komponente A wurde erhalten, indem 72 Teile eines Vinyldimethylsiloxygruppen als endständige Einheiten aufweisenden Polydimethylsiloxans mit einer Viskosität von 20 Pas, 30 Teile einer hydrophobierten, pyrogen erzeugten Kieselsäure mit einer Oberfläche von 300 $m^2$/g, 0,16 Teile einer polysiloxanhaltigen Platinzubereitung und 0,07 Teile Ethinylcyclohexanol bei 25°C innig vermischt wurden.

b) Eine Komponente B wurde erhalten, indem 70 Teile eines Vinyldimethylsiloxygruppen als endständige Einheiten enthaltenden Polydimethylsiloxans mit einer Viskosität von 20 Pas, 29 Teile einer hydrophobierten, pyrogen erzeugten Kieselsäure mit einer Oberfläche von 300 $m^2$/g, 4,4 Teile eines Copolymerisats aus Dimethylsiloxan-, Methylhydrogensiloxan- und Trimethylsiloxaneinheiten mit einer Viskosität von 0,4 Pas, 0,07 Teile Ethinylcyclohexanol und 0,2 Teile 2,5-Dimethyl-2,5-bis (tert.butylperoxy)hexan bei 25°C innig vermischt wurden.

c) Die Komponenten A und B wurden dann jeweils im Gewichtsverhältnis 1:1 miteinander vermischt. Aus dieser Mischung wurden nach einer Vulkanisationszeit von 5 Minuten bei 170°C Platten mit einer Stärke von 2 und 6 mm gewonnen. Die Resultate sind in der Tabelle zusammengefaßt.

**Beispiel 2 (Kontrollbeispiel):**

a) Eine Komponente A wurde erhalten, indem 72 Teile eines Vinyldimethylsiloxygruppen als endständige Einheiten aufweisenden Polydimethylsiloxans mit einer Viskosität von 20 Pas, 30 Teile einer hydrophobierten, pyrogen erzeugten Kieselsäure mit einer Oberfläche von 300 $m^2$/g, 0,16 Teile einer polysiloxanhaltigen Platinzubereitung, 0,07 Teile Ethinylcyclohexanol und 0,2 Teile 2,5-Dimethyl-2,5-bis (tert.butylperoxy) hexan bei 25°C innig vermischt wurden.

b) Eine Komponente B wurde erhalten, indem 70 Teile eines Vinyldimethylsiloxygruppen als endständige Einheiten enthaltenden Polydimethylsiloxans mit einer Viskosität von 20 Pas, 29 Teile einer hydrophobierten, pyrogen erzeugten Kieselsäure mit einer Oberfläche von 300 $m^2$/g, 4,4 Teile eines Copolymerisats aus Dimethylsiloxan-, Methylhydrogensiloxan- und Trimethylsiloxaneinheiten mit einer Viskosität von 0,4 Pas und 0,07 Teile Ethinylcyclohexanol bei 25°C innig vermischt wurden.

c) Die Komponenten A und B wurden dann jeweils im Gewichtsverhältnis 1:1 miteinander vermischt. Aus dieser Mischung wurden nach einer Vulkanisationszeit von 5 Minuten bei 170°C Platten mit einer Stärke von 2 und 6 mm gewonnen. Die Resultate sind in der Tabelle zusammengefaßt.

| | Druckverformungsrest | | Lagerstabilität | | |
|---|---|---|---|---|---|
| | C.S.* (%, ungetempert) | C.S. (%, getempert) ** | t90 (sek, sofort) | t90 (sek, 1 Monat) | t90 (sek, 2 Monate) |
| Bsp.1 | 26 | 14 | 60 | 68 | 65 |
| Bsp.2 | 24 | 18 | 65 | 100 | 111 |

\* Messung Compression Set (Druckverformungsrest): 22 h / 175°C

\*\* Temperung: 4 h / 200°C

Der Compression Set wird nach DIN 53517 gemessen, wobei t90 90% Vernetzung nach der in der Tabelle angegebenen Zeit in Sekunden bedeutet.

**Patentansprüche**

1. Zu Elastomeren vernetzende Massen auf der Basis von

    Komponente (A), enthaltend Polyorganosiloxan (I) mit mindestens zwei Alkenylgruppen pro Molekül
    und

    Komponente (B), enthaltend Polyorganosiloxan (II) mit mindestens zwei siliciumgebundenen Wasserstoffatomen und organischem Peroxid (III).

2. Zu Elastomeren vernetzende Massen nach Anspruch 1, dadurch gekennzeichnet, daß Komponente (B) noch zusätzlich Polyorganosiloxan (I) enthält.

3. Zu Elastomeren vernetzende Massen nach Anspruch 1 oder 2, dadurch gekennzeichnet, daß Komponente (A) einen metallischen Katalysator (IV) enthält.

4. Zu Elastomeren vernetzende Massen nach einem der Ansprüche 1, 2 oder 3, dadurch gekennzeichnet, daß das organische Peroxid 2,5-Dimethyl-2,5-bis(tert.butylperoxy)hexan oder Dicumylperoxid ist.

5. Zu Elastomeren vernetzende Massen nach einem oder mehreren der Ansprüche 1, 2, 3 oder 4, dadurch gekennzeichnet, daß das organische Peroxid in Mengen von 0,01 - 0,19 Gew.% bezogen auf das Gesamtgewicht der Masse enthalten ist.

6. Verfahren zur Herstellung von Massen nach einem oder mehreren der Ansprüche 1, 2, 3, 4 oder 5, dadurch gekennzeichnet, daß Komponente (A) mit Komponente (B) vermischt wird.

7. Formkörper enthaltend Massen nach einem oder mehreren der Ansprüche 1, 2, 3, 4 oder 5 oder hergestellt nach Anspruch 6, dadurch gekennzeichnet, daß der Formkörper ungetempert ist.

Europäisches
Patentamt

**EUROPÄISCHER RECHERCHENBERICHT**

Nummer der Anmeldung

EP 97 11 1716

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X<br><br>D | US 4 929 669 A (J. D. JENSEN)<br>* Beispiel 1 *<br>* Ansprüche 1,8 *<br>& EP 0 377 185 B<br><br>----- | 1-6 | C08L83/04<br>C08K5/14 |
| | | | **RECHERCHIERTE SACHGEBIETE (Int.Cl.6)**<br><br>C08K<br>C08L |

Der vorliegende Recherchenbericht wurde für alle Patentansprüche erstellt

| Recherchenort | Abschlußdatum der Recherche | Prüfer |
|---|---|---|
| BERLIN | 19.August 1997 | Hoepfner, W |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
......................................................................
\& : Mitglied der gleichen Patentfamilie, übereinstimmendes
    Dokument

EPO FORM 1503 03.82 (P04C03)